# FASCICULE DE BREVET EUROPEEN

(11) **EP 1 910 446 B1**
(45) Date de publication et mention de la délivrance du brevet: **13.07.2016**
(21) Numéro de dépôt: 06794197.1
(22) Date de dépôt: 21.07.2006
(51) Int. Cl.: C08G 73/02, C08F 265/04, C08L 51/00, C08L 79/02, C09D 151/00, C09D 179/02, H01B 1/12, C09D 5/24

(54) **PARTICULES NANOCOMPOSITES ELECTRIQUEMENT CONDUCTRICES POSSEDANT UN COEUR DE POLYACRYLATE D'ALKYLE ET UNE ECORCE DE POLYANILINE**
ELEKTRISCH LEITFÄHIGE VERBUNDNANOPARTIKEL MIT ALKYLPOLYACRYLATKERN UND POLYANILINBESCHICHTUNG
ELECTRICALLY CONDUCTIVE COMPOSITE NANOPARTICLES HAVING AN ALKYL POLYACRYLATE CORE AND A POLYANILINE COATING

(30) Priorité: 29.07.2005 FR 0508172
(43) Date de publication de la demande: 16.04.2008
(73) Titulaire: UPPA - Université de Pau et des Pays de l'Adour, 64012 Pau Cedex (FR); Centre National de la Recherche Scientifique (CNRS), 75016 Paris (FR)
(72) Inventeur: REYNAUD, Stéphanie, F-64140 Lons (FR); KOHUT SVELKO, Nicolas, F-64000 Pau (FR); JOUBERT, Mathieu, F-64000 Pau (FR)
(74) Mandataire: Domenego, Bertrand
(86) Numéro de dépôt international: PCT/FR2006/001792
(87) Numéro de publication internationale: WO 2007/012736

(56) Documents cités:
- EP-A- 0 589 529
- EP-A- 1 258 513
- WO-A-01/92377
- US-B1- 6 593 399

## Description

La présente invention concerne des particules nanocomposites électriquement conductrices possédant un coeur de polyacrylate d'alkyle et une écorce de polyaniline, les dispersions les comprenant et leur utilisation pour la préparation de films conducteurs. L'invention concerne également un procédé de préparation de particules, comprenant un coeur élastomère et une écorce de polyaniline.

Les polymères intrinsèquement conducteurs (PICs) possèdent les propriétés électroniques des semi-conducteurs ainsi que les propriétés mécaniques des polymères. Parmi les PICs les plus connus, on peut citer le polypyrrole, le polythiophène ou la polyaniline.

La polyaniline (PANI) est particulièrement intéressante grâce notamment à sa bonne stabilité thermique en conditions atmosphériques, à son faible coût, à ses propriétés anti-corrosion, et à sa forte conductivité. Cependant, la polyaniline est un matériau rigide, infusible et soluble dans un nombre très limité de solvants, ce qui rend sa manipulation particulièrement difficile et limite son utilisation.

Plusieurs méthodes permettant d'améliorer la manipulation de la polyaniline ont été décrites, en particulier des méthodes utilisant une structure coeur-écorce. Le coeur, généralement constitué d'un polymère inorganique ou d'un polymère vinylique, confère au matériau composite des propriétés mécaniques tandis que l'écorce, constituée du polymère conducteur, apporte des propriétés conductrices..

Toutefois, il a été démontré que les propriétés conductrices du matériau composite résultant varient considérablement selon la nature du polymère constituant le coeur. Réciproquement, les propriétés mécaniques du polymère constituant le coeur peuvent varier selon la nature du polymère intrinsèquement conducteur constituant l'écorce.

Des particules coeur-écorce [polyuréthane-polyaniline] ont été décrites dans la demande EP 0 589 529. Des particules comprenant un coeur de copolymère d'acrylate de n-butyle de méthacrylate de méthyle et de méthacrylate d'allyle et une écorce de polyaniline sont décrites dans le brevet US 6,399,675

. Le brevet US 6,593,399 B1 décrit un procédé de préparation de particules coeur écorce dont l'écorce est contituée de polyaniline.

Par ailleurs, il a également été décrit un procédé de préparation de particules comprenant une écorce de polyaniline et un coeur thermoplastique de polystyrène, en un seul "batch" (N. Kohut Svelko, S. Reynaud, Langmuir 2005, 21, 1575-1583).

Il a maintenant été synthétisé des particules nanocomposites comprenant un coeur élastomère constitué d'un homopolymère de polyacrylate d'alkyle, une écorce constituée de polyaniline et un tensioactif.

De façon surprenante, ces particules permettent d'obtenir des composites présentant à la fois une conductivité élevée et de bonnes propriétés filmogènes. A titre d'exemple, des conductivités comprises entre 0,0001 et 5,00 S/cm, et notamment entre 0,01 et 5,00 S/cm, par exemple, entre 0,01 et 0,20 S/cm plus particulièrement, sont obtenues pour des compositions à faibles taux de polyaniline, notamment de 5 à 20% en masse de polyaniline.

De plus, ces composites présentent de bonnes propriétés d'adhésion avec différents matériaux, notamment avec le verre, le papier, le métal.

Enfin, ces composites restent conducteurs à des températures variant de 20°C à 200°C sur des temps de séjour pouvant atteindre plusieurs heures, en atmosphère saturée jusqu'à 90% d'humidité et en milieu acide ou basique (pH variant de 1 à 10).

Les dispersions de ces particules permettent d'appliquer un film conducteur sur des objets de façon simple. Ainsi, après application homogène de la dispersion sur un objet et élimination du milieu dispersant, un revêtement conducteur est obtenu.

En outre, ces particules de coeur de composition simple sont peu coûteuses, faciles d'accès et peuvent être préparées selon un procédé particulièrement avantageux. Ainsi, il a également été mis au point un procédé de préparation de particules comprenant un coeur élastomère, une écorce de polyaniline et un tensioactif, dans lequel les réactions de polymérisation de la polyaniline et du polymère élastomère sont réalisées directement dans le même milieu.

Ce procédé constitue un procédé économique, facile à mettre en oeuvre, rapide et ne nécessite pas d'appareillage spécifique pour obtenir des composites conducteurs aux propriétés filmogènes en sortie de synthèse. Plus précisément, ce procédé peut être mis en oeuvre dans des conditions douces, en milieu aqueux, à partir de produits commerciaux, dans un seul réacteur, et constitue donc un procédé facilement transposable à l'échelle industrielle.

Selon un autre aspect avantageux, ce procédé peut être mis en oeuvre à partir de seulement quatre réactifs : un monomère élastomère, un tensioactif, un catalyseur de polymérisation et un monomère aniline.

### Particules

Ainsi, selon un premier aspect, la présente invention concerne des particules nanocomposites électriquement conductrices comprenant :
- un coeur constitué d'un homopolymère de polyacrylate d'alkyle en C₁-C₆ ou d'un copolymère d'acrylate d'alkyle en C₁-C₆ et d'un comonomère amide α, β-insaturée;
- une écorce constituée de polyaniline ;
- un tensioactif. ,

Par "nanocomposite", on entend des particules composites de taille inférieure au micromètre. La taille du coeur est généralement de l'ordre de 20 nm à 700 nm et la taille de l'écorce est généralement de l'ordre de quelques nm à 100 nm.

Au sens de la présente description, le terme "polyaniline" couvre la polyaniline ou l'un de ses dérivés. Les dérivés de polyaniline sont des polymères dans lesquels les motifs monomères aniline sont substitués sur l'azote ou sur le noyau aromatique. Des exemples de substituants du noyau aromatique sont notamment le groupe hydroxy, les atomes d'halogène, en particulier le chlore, les groupes alkyle en C₁-C₄, en particulier le méthyle, l'éthyle, l'isopropyle et les groupes, alkoxy en C₁-C₄ tels que le méthoxy, l'éthoxy, le n-ou l'iso-propoxy, le n-, l'iso- ou le tertio-butoxy. L'atome d'azote peut être, par exemple, substitué par des groupes alkyle en C₁-C₄.

Par "écorce constituée de polyaniline", on entend un dépôt continu ou discontinu constitué de polyaniline liée physiquement (i. e. adsorbée) et/ou chimiquement (i. e. greffée) à la surface du coeur de polyacrylate d'alkyle. De préférence, ce dépôt est discontinu. De façon préférée, l'écorce est adsorbée à la surface du coeur.

Un "homopolymère de polyacrylate d'alkyle" signifie un polymère résultant de l'enchaînement de plusieurs motifs monomères acrylate d'alkyle identiques.

Au sens de la présente description, le terme "polyacrylate d'alkyle" englobe des polyméthacrylates d'alkyle. Des exemples de polyacrylates d'alkyle en C₁-C₆ sont notamment le polyméthacrylate de méthyle, le polyacrylate de méthyle, le polyacrylate d'éthyle, le polyméthacrylate d'éthyle, le polyacrylate de n-propyle ou d'isopropyle, le polyméthacrylate de n-propyle ou d'isopropyle, le polyacrylate de n-, sec- ou tertio-butyle et le polyméthacrylate de n-, sec- ou tertio-butyle.

De préférence, le polyacrylate d'alkyle en C₁-C₆ est le polyacrylate de n-butyle. Celui-ci possède avantageusement une température de transition vitreuse de -54°C ce qui permet d'obtenir des propriétés filmogènes à température ambiante.

Selon une variante de l'invention, le polyacrylate d'alkyle est réticulé. Des exemples d'agents de réticulation particulièrement appropriés sont notamment les composés diacrylate, de préférence le 1,6 hexanediol diacrylate. Ce dernier est notamment disponible sous la dénomination commerciale SR238® (Cray Valley). La réticulation du polyacrylate d'alkyle permet en effet de moduler les propriétés mécaniques du composite conducteur et notamment de réduire son élasticité.

Selon une variante préférée de l'invention, le coeur est constitué d'un copolymère d'acrylate d'alkyle en C₁-C₆ et d'un comonomère amide α, β-insaturée.

Il a en effet été démontré que la présence des fonctions amides sur les particules de coeur permet d'améliorer la compatibilité avec l'écorce de polyaniline et donc le recouvrement du coeur ainsi que la conductivité. Ainsi, sans vouloir se limiter à une théorie, il a été démontré que la présence de fonctions amides favorise l'établissement de liaisons hydrogène avec la polyaniline.

Au sens de la présente description, les termes "comonomère amide α, β-insaturée" englobent les amides α, β-insaturées ou leurs dérivés. De préférence, l'amide α, β-insaturée est éthyléniquement insaturée, et plus préférentiellement l'acrylamide. Les dérivés d'amide insaturée sont des monomères substitués sur la double ou la triple liaison, par exemple par des groupes alkyles tels que méthyl, éthyl, propyl. A titre d'exemple de dérivé d'amide α, β-insaturée, on peut citer notamment l'acrylamide et ses dérivés tels que le méthacrylamide. Le copolymère de poly(acrylate d'alkyle) en C₁-C₆ et de comonomère amide α, β-insaturée peut être un copolymère bloc, greffé ou statistique.

De préférence, le rapport en poids de monomère de type acrylate d'alkyle/comonomère amide α, β-insaturée varie de 90/10 à 99,5/0,5.

De préférence, le rapport en poids de polyacrylate d'alkyle / polyaniline ou copolymère d'acrylate d'alkyle avec un comonomère amide α, β-insaturée /polyaniline varie de 45:55 à 98:2 et est de préférence compris entre 50:50 et 95:5.

Les particules selon l'invention sont obtenues par polymérisation de la polyaniline dans une dispersion de polyacrylate d'alkyle (ou d'un copolymère acrylate d'alkyle/comonomère amide α, β-insaturée) stabilisée par la présence d'un tensioactif. Le tensioactif peut être non ionique ou ionique, notamment anionique. Il est de préférence non ionique car les tensioactifs ioniques peuvent interférer de façon indésirable dans les réactions de polymérisation, en particulier au cours de la polymérisation de la polyaniline.

Par "tensioactif non ionique", on entend un tensioactif non chargé dans les conditions opératoires.

Le tensioactif non ionique peut être physiquement adsorbé à la surface des particules de polyacrylate d'alkyle (i.e. liées physiquement) ou incorporées dans le polyacrylate d'alkyle (i.e. liées chimiquement).

De préférence, le tensioactif non ionique est physiquement lié au polyacrylate d'alkyle. Ceci peut être obtenu en réalisant la polymérisation du polyacrylate d'alkyle en présence de tensioactif non ionique.

Le tensioactif non ionique peut être choisi parmi une grande variété de composés dont notamment les alkoxylates d'alkylphénol, les alkoxylates d'alcool, les alkoxylates d'alkyle, les alkoxylates d'amine, les oxydes d'alkylamine, en particulier parmi les éthoxylates d'alkylphénol, les éthoxylates d'alcool, les éthoxylates d'alkyle, ou les copolymères blocs EO/PO (oxyde d'éthylène/ oxyde de propylène), les éthoxylates ou polyéthoxylates d'amine.

Cependant, on préfère tout particulièrement les tensioactifs non ioniques, répondant à la formule (I) suivants : 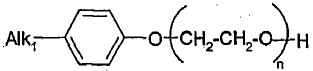 dans laquelle Alk₁ désigne un groupe alkyle en C₁-C₂₀ et n représente un entier de 1 à 100.

De préférence, Alk₁ est un groupe alkyle en C₁-C₁₅.

Selon une variante particulièrement préférée, on utilise le nonylphénol éthoxylate, comprenant de préférence 40 unités éthoxylates, représenté par la formule ci-dessous : 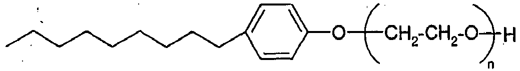 où n=40.

Ce tensioactif est avantageusement disponible commercialement, notamment sous la dénomination Igepal® CO 897 (Rhodia).

La quantité de tensioactif non ionique mise en oeuvre n'est pas critique et peut varier dans une large mesure. Ainsi, les dispersions de particules de faibles tailles requièrent généralement une quantité de tensioactif stabilisant plus élevée que les particules de taille plus grande. Cependant, cette quantité doit être suffisante pour permettre de stabiliser les particules de polyacrylate d'alkyle et ne doit pas être trop importante pour ne pas altérer les propriétés mécaniques et conductrices des particules.

Le tensioactif non ionique présent dans les particules selon l'invention représente généralement 1 % à 20 % en masse, et plus préférentiellement de 1 à 10 % en masse, les valeurs en masse étant exprimées par rapport à la masse totale sèche de l'écorce et du coeur.

Selon une variante particulièrement préférée de l'invention, les particules comprennent en outre un deuxième tensioactif non ionique possédant des fonctions chimiques capables d'améliorer la conductivité du composite.

A titre d'exemple, on peut citer les tensioactifs non ionique comprenant au moins une fonction amide, tels que les composés de formule (II) : 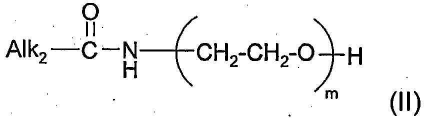 dans laquelle Alk₂ désigne un groupe alkyle en C₁-C₂₀, de préférence en C₁-C₁₅, et m représente un entier de 1 à 100.

Selon une variante préférée, on utilise un composé de formule (II) dans laquelle Alk₂ est un groupe alkyle en C₁₁ et m représente un nombre moyen de 6. Celui-ci est disponible commercialement sous la dénomination Ninol® (Stepan).

Ainsi, sans vouloir se limiter à une théorie, il a été démontré que les fonctions amides présentes à la surface du coeur permettent d'obtenir un meilleur recouvrement de la particule de coeur et permettent aussi l'établissement de liaisons hydrogène avec la polyaniline. Ces propriétés permettent donc d'améliorer la conductivité.

De préférence, ce deuxième tensioactif non ionique représente 1 % à 20 % en masse par rapport à la masse sèche de l'écorce et du coeur.

### Dispersion de particules

Selon un autre aspect, l'invention concerne une dispersion comprenant les particules telles que définies ci-dessus dans un milieu dispersant. De préférence, les particules sont dispersées en milieu aqueux, notamment dans l'eau.

La teneur en solide de la dispersion de particules de polyacrylate d'alkyle ou de copolymère acrylate d'alkyle/comonomère amide α, β-insaturée est généralement comprise entre 1 et 60 % en poids de la dispersion, de préférence de 10 à 40 % en poids.

De préférence, les particules de coeur de polyacrylate d'alkyle ou de copolymère acrylate d'alkyle/comonomère amide α, β-insaturée possèdent une taille hydrodynamique de 100 à 700 nm, de préférence de 200 à 400 nm la taille hydrodynamique des particules étant mesurée par diffusion de la lumière dynamique ou sur couche mince.

La faible taille du coeur et donc des particules résultantes permet avantageusement de favoriser la formation de chemins de conduction dans le matériau composite ultérieur. Elle permet en outre de préparer des films composites très minces et de favoriser l'application des dispersions par exemple par pulvérisation.

### Procédé de préparation des dispersions de particules

Selon un autre aspect, l'invention concerne un procédé de préparation d'une dispersion de particules comprenant :
un coeur constitué d'un polymère élastomère ou d'un copolymère d'un monomère élastomère et d'un comonomère amide α, β-insaturée,
- une écorce constituée de polyaniline, et
- d'un tensioactif non ionique,
ledit procédé comprenant :
a) la polymérisation de monomères élastomères, et le cas échéant de monomères amides α, β-insaturées, en présence d'un tensioactif non ionique et d'un catalyseur de polymérisation dans un milieu dispersant ; et
b) l'addition de monomères aniline et d'un catalyseur de polymérisation au milieu contenant les particules de polymère élastomère ou de copolymère de monomère élastomère et d'un comonomère amide α, β-insaturée obtenues à l'étape a), dans lequel la température du milieu réactionnel de l'étape b) peur varier de -5 à 30°C et
la polymérisation des monomères aniline est effectuée directement dans le milieu obtenu après polymérisation des monomères d'élastomère, sans qu'il soit nécessaire d'isoler les particules d'élastomère formées intermédiairement.

La synthèse des dispersions de particules d'élastomère et de polyaniline peut donc être avantageusement réalisée dans un seul réacteur dans un système continu.

### Etape a)

Par "polymère élastomère", on entend au sens de la présente description un homopolymère ou un copolymère dont le ou les point(s) de transition vitreuse est/sont inférieur(s) à la température ambiante, de préférence inférieur(s) à 0°C, plus préférentiellement inférieur(s) à -10°C, et mieux encore inférieur(s) à -20°C Les élastomères présentent des propriétés analogues à celles du caoutchouc naturel.

De préférence, le polymère élastomère est un homopolymère.

Des exemples d'élastomères utiles selon l'invention sont notamment les élastomères de dioléfines tels que le polybutadiène, les copolymères butadiène-styrène, les copolymères butadiène-acrylonitrile, le polychloro-prène, les élastomères de monooléfines tels que l'isobutylène, les copolymères isobutylène isoprène, les polymères et copolymères d'éthylène tels que le polyéthylène chloré, le polyéthylène chlorosulfoné, les copolymères éthylène-acétate de vinyle, éthylène-propylène, éthylène-esters acryliques, les élastomères fluorés tels que les élastomères chlorofluorés obtenus par copolymérisation de trifluorochloroéthylène avec une dioléfine comme le butadiène ou l'isoprène, et les élastomères de polycondensation tels que les polyesters, les polyuréthanes, les polysulfures organiques et les silicones, les esters polyacryliques ou méthacryliques.

Selon une variante particulièrement préférée, le polymère élastomère est un ester polyacrylique ou méthacrylique, de préférence un polyacrylate ou polyméthacrylate d'alkyle en C₁-C₆, notamment un polyacrylate d'alkyle en C₁-C₆, et plus préférentiellement le polyacrylate de n-butyle.

Les monomères élastomères mis en oeuvre à l'étape a) peuvent être de nature identique, dans le cas d'un homopolymère élastomère, ou différente, dans le cas d'un copolymère élastomère. De préférence, on met en oeuvre au plus deux types de monomères élastomères de nature différente. De façon préférée, les monomères élastomères sont de même nature, et plus préférentiellement ils sont choisis parmi les acrylates ou méthacrylates d'alkyle en C₁-C₆.

Selon une autre variante préférée, le polymère élastomère est un copolymère de monomère élastomère et de comonomère amide α, β-insaturée.

Le comonomère amide α, β-insaturée peut être alors ajouté comme additif au cours de la polymérisation du/des monomère(s) élastomère(s), de préférence en même temps que le monomère élastomère.

De préférence, le tensioactif est non ionique, celui-ci jouant le rôle de stabilisant de la dispersion des monomères élastomères, puis des particules de polymères élastomères.

Selon une variante préférée, le milieu dispersant comprend un deuxième tensioactif préférentiellement non ionique.

Le milieu dispersant peut être un solvant organique ou de l'eau. De préférence, il représente un milieu aqueux, notamment de l'eau.

Le catalyseur de polymérisation mis en oeuvre à l'étape a) est utilisé pour initier la réaction de polymérisation du polymère élastomère.

Le catalyseur de polymérisation peut être choisi parmi les composés couramment utilisés pour la polymérisation des polymères élastomères. Il peut s'agir notamment d'un catalyseur de polymérisation par radicaux libres ou d'un catalyseur métallique. De préférence, un catalyseur de polymérisation par radicaux libres est utilisé. A titre d'exemple, on peut citer les composés azoïques tels que le 2,2'-azobis(isobutyronitrile) (AIBN) et peroxydes comme le peroxyde d'hydrogène ou l'hydroperoxyde de tert-butyle. D'autres exemples de catalyseurs de polymérisation sont les composés K₂Cr₂O₇, KIO₃, K₂S₂O₈, Na₂S₂O₈, NaBO₃, H₂O₂, et (NH₄)₂S₂O₈. De préférence, le catalyseur de polymérisation est un persulfate de métal alcalin ou alcalino-terreux tels que le persulfate de sodium, de potassium, de lithium ou encore le persulfate d'ammonium, ce dernier étant particulièrement préféré.

La quantité de catalyseur de polymérisation n'est pas critique et varie généralement de 0,001 à 5 % en poids par rapport au monomère élastomère.

Il est généralement ajouté sous forme de solution, de préférence préalablement dégazée, par exemple par bullage avec un gaz inerte tel que l'azote ou l'argon.

L'ordre d'introduction des réactifs à l'étape a) n'est pas critique. Toutefois, il est préférable d'ajouter successivement : (1) le tensioactif non ionique ; (2) le monomère élastomère et (3) le catalyseur de polymérisation dans le milieu dispersant.

La température à laquelle s'effectue la polymérisation du polymère élastomère n'est pas critique et est généralement comprise entre 35° et 90 °C, de préférence entre 60° et 80°C. La durée de la réaction peut varier de quelques heures à quelques jours. A titre indicatif, en opérant à 70°C, la polymérisation du polyacrylate de n-butyle est réalisée en moins de 24 heures de réaction.

### Etape b)

Préférentiellement, les monomères aniline et le catalyseur de polymérisation sont ajoutés lorsque la polymérisation des monomères élastomères est terminée.

La fin de la polymérisation de l'élastomère peut être déterminée par des prélèvements et des dosages du polymère solide et/ou des monomères élastomères résiduels dans le milieu.

A titre d'exemple, l'avancement de la réaction de polymérisation de l'élastomère peut être suivi par exemple par gravimétrie, ou RMN.

De préférence, le catalyseur de polymérisation à l'étape b) est ajouté après l'aniline, et plus particulièrement après abaissement de la température du milieu à une valeur inférieure à 0°C.

Le catalyseur de polymérisation peut être choisi parmi les composés couramment utilisés pour la polymérisation de la polyaniline. Il peut être notamment identique ou différent à/de celui mis en oeuvre à l'étape a) au cours de la polymérisation du polymère élastomère.

Selon une variante préférée, le catalyseur de polymérisation mis en oeuvre à l'étape b) est identique à celui mis en oeuvre à l'étape a). Ceci permet de limiter le nombre de réactifs et d'éventuels sous-produits de réaction.

De préférence, le catalyseur de polymérisation est le persulfate d'ammonium ((NH₄)₂S₂O₈). Avantageusement, il est ajouté successivement dans l'étape de polymérisation du polymère élastomère à l'étape a) et de la polyaniline à l'étape b).

De préférence, le catalyseur de polymérisation ajouté à l'étape b) représente de 100 à 300% en poids par rapport à l'aniline.

De préférence, les monomères aniline sont polymérisés en présence d'un dopant. Le dopant de la polyaniline peut être choisi parmi les composés couramment utilisés. Il peut s'agir notamment de l'acide chlorhydrique, de l'acide phosphorique et de ses dérivés, de l'acide phosphonique et de ses dérivés, de l'acide sulfurique et de ses dérivés, l'acide sulfonique et ses dérivés. Selon une variante préférée, le dopant est l'acide chlorhydrique. Celui-ci offre en effet plusieurs avantages : il est économique et ne possède pas de propriétés tensioactives susceptibles d'influer sur la cinétique de polymérisation. De plus, contrairement aux dopants plastifiants qui sont rarement commerciaux, il ne requiert pas d'étape de traitement supplémentaire à l'issue de la polymérisation.

Par "dopant", on entend un agent capable de convertir la polyaniline sous sa forme polyémeraldine base, en polyaniline sous forme acide (ou sel d'émeraldine), laquelle possède des propriétés conductrices. Il est généralement mis en oeuvre dans des quantités variant de 0,5 à 3 % en moles par rapport à l'aniline.

Selon une variante particulièrement préférée, les monomères anilines sont mis en oeuvre sous forme de chlorhydrate d'anilinium.

La température du milieu réactionnel n'est pas critique pour la polymérisation de la polyaniline et peut varier de -5°C à 30°C. On préfère cependant opérer à basse température dans un premier temps, notamment à 0°C puis laisser la température remonter à température ambiante.

L'achèvement de la réaction de polymérisation de l'aniline peut être déterminé selon des techniques conventionnelles, par exemple, par mesure UV de la concentration du monomère aniline résiduel dans le milieu de réaction.

Une dispersion dans laquelle la polyaniline est adsorbée à la surface des particules de polymère élastomère est ainsi obtenue. Cette dispersion peut néanmoins contenir des particules de polyaniline libres, i.e. non adsorbées à la surface du polymère élastomère. Ceci n'a cependant pas été observé dans le procédé selon l'invention.

Selon une variante particulièrement préférée, des dispersions de particules de polyacrylate de n-butyle-polyaniline sont préparées selon le procédé comprenant :
a) la polymérisation des monomères acrylate de n-butyle en présence de nonyl phénol éthoxylate et de persulfate d'ammonium dans l'eau, et
b) la polymérisation des monomères chlorhydrates d'anilinium en présence de persulfate d'ammonium dans le milieu obtenu à l'étape a).

Selon un autre aspect avantageux, le procédé de préparation selon l'invention ne comprend pas d'étape de traitement après polymérisation de la polyaniline. Ce post-traitement est généralement nécessaire dans les méthodes de l'art antérieur pour éliminer les réactifs ou les solvants toxiques ou corrosifs présents dans le milieu réactionnel.

Ainsi, la dispersion obtenue selon ce procédé peut être directement utilisée pour la préparation de composites conducteurs par simple évaporation du milieu dispersant. Les écorces de polyaniline entrent alors en contact lors d'une phase de percolation et forment un continuum de polymère intrinsèquement conducteur à travers la matrice d'élastomère.

Selon un autre aspect, l'invention concerne l'utilisation des particules électriquement conductrices selon l'invention ou d'une dispersion de ces particules pour la préparation ou l'application d'un matériau conducteur, notamment d'un film conducteur.

L'invention concerne également un procédé de préparation d'un film conducteur comprenant :
- un procédé de préparation d'une dispersion de particules d'élastomère et de polyaniline tel que défini ci-dessus et
- l'élimination du milieu dispersant.

L'élimination du milieu dispersant peut être effectuée selon des techniques conventionnelles, notamment par évaporation, par exemple par chauffage et/ou sous pression réduite ou encore après centrifugation de la dispersion de particules.

Selon une variante, ce procédé comprend une étape d'application de la dispersion de particules d'élastomère et de polyaniline sur une surface.

De préférence, la dispersion de particules d'élastomère et de polyaniline mise en oeuvre selon ce procédé est une dispersion de particules de polyacrylate d'alkyle en C₁-C₆ et de polyaniline selon l'invention.

L'invention a également pour objet un film conducteur susceptible d'être obtenu à partir d'une dispersion de particules d'alkyle en C₁-C₆ et de polyaniline selon le procédé défini ci-dessus.

De façon avantageuse, les films conducteurs obtenus présentent une conductivité spécifique comprise entre 0,01 et 0,20 S/cm, et notamment entre 0,01 et 5,00 S/cm.

Ces composites sont particulièrement utiles pour le traitement de surface, notamment pour leurs propriétés anti-statiques, anti-corrosives et thermiques. Ils sont également utiles pour leurs propriétés d'adhésion et pour le blindage électromagnétique, textile, diodes électroluminescentes (encore appelées OLED : Organic Light Emitting Diode).

Les dispersions de particules selon l'invention, leurs procédés de préparation et leur propriétés apparaîtront plus clairement lors de l'étude des exemples suivants qui sont présentés comme une illustration uniquement et ne doivent pas être considérés comme limitant la portée de l'invention.

### EXEMPLES

### Matériels et méthodes

L'Igepal® CO 897 ou nonylphénol éthoxylate 40 (encore appelé NP 40, HLB = 17,8) a été fourni par Rhodia.

Le Ninol® ou polyoxyéthylène lauramide a été fourni par Stepan.

L'acrylate de n-butyle, le chlorhydrate d'anilinium, le disulfate d'anilinium, le persulfate d'ammonium, l'acrylamide, l'acide phosphorique (85 % dans l'eau), l'acide méthylsulfonique, l'acide éthylsulfonique (70 % dans l'eau), l'acide éthylphosphonique ont été fournis par Aldrich^{®}.

Le réticulant 1,6 hexanediol diacrylate (SR238®) a été fourni par Cray Valley.

Les composites ont été analysés de la façon suivante :
- La stabilité thermique a été mesurée avec un appareil de TA Instrument (Thermal Analyst 2000). Les mesures ont été effectuées sous atmosphère contrôlée. Le débit total est de 100 mL / min avec une distribution de 40 mL/min pour la balance de précision (azote) et 60 mL/min pour le four (oxygène). La vitesse de chauffage est de 10 °C/min. de 40°C à 900°C.
- Les spectres Infra Rouge ont été enregistrés sur un appareil Bruker IFS 66/S sur des pastilles de KBr. Les spectres ont été obtenus après 50 scans et une résolution de 4cm⁻¹.
- Les spectres UV-Visible ont été enregistrés sur un appareil Shimadzu UV 2101 avec une échelle de longueur d'onde de 190 à 900 nm. Le taux de polymérisation de l'aniline a été estimé en mesurant le monomère résiduel dans le surnageant après centrifugation.
- La taille des particules de latex a été mesurée sur un appareil, le DL 135-45 de diffusion de lumière inélastique, développé par l'Institut Français du Pétrole. Cette technique permet de mesurer la taille de particules dans des solutions concentrées. Les résultats ont été confirmés par diffusion dynamique de la lumière sur des solutions très diluées (solvant : l'eau, longueur d'onde 514,5 nm)
- Les masses moléculaires ont été déterminées par chromatographie d'exclusion stérique (CES) dans le THF. Les échantillons sont d'abord mis en solution dans le THF et filtrés sur des filtres de 0,2 µm en PTFE. La calibration est basée sur des étalons de polystyrènes linéaires.
- La conductivité des composites a été mesurée avec un appareil 4 fils.

### Abréviations :

PBuA = polyacrylate de n-butyle
PANI-Cl = polyaniline dopée par HCl
PANI-SO₄ = polyaniline dopée par H₂SO₄
PANI-CH₃SO₃ = polyaniline dopée par CH₃SO₃H
PANI-C₂H₅SO₃ = polyaniline dopée par C₂H₅SO₃H
PANI-C₂H₅PO₃ = poyaniline dopée par C₂H₅PO₃H₂
PANI-H₂PO₄ = polyaniline dopée par H₃PO₄
PAam = polyacrylamide
ATG = Analyse thermique
S/cm = Siemens/cm
Mn = masse molaire mesurée par CES.

### Exemple 1 : PBuA/PANI-Cl avec Igepal® CO 897 50/50

Dans un tricol muni d'une agitation mécanique, d'un réfrigérant et d'une ampoule d'addition, on dissout 3,325 g de tensioactif Igepal® CO 897 sec dans 200 mL d'eau avant d'ajouter en une fois 86,318 g d'acrylate de butyle (purifié par passage sur alumine basique) pour former l'émulsion. Le mélange réactionnel est porté à 70°C avant l'ajout de la solution oxydante (0,293 g d'ammonium persulfate (NH₄)₂S₂O₈ dans 4,088 mL d'eau). Le mélange réactionnel est laissé à 70°C, sous agitation (180 tr/min) pendant 24 heures. Le rendement de polymérisation est estimé à 87 % par gravimétrie, le taux de solide est à 27,37%. (Mn (CES, détection réfractométrique) = 428700, Ip=3,0.) Le rayon des particules est mesuré par diffusion de lumière sur couche mince à 110 nm. Analyse thermique : début de dégradation à 290°C, dégradation totale à 600°C.

On prélève 6,654 g de latex qui sont placés dans un ballon de 250 mL contenant 134,9 g d'eau. 2,06 g de chlorhydrate d'anilinium sont additionnés au mélange et laissé sous agitation 30 min avant d'abaisser le mélange réactionnel à 0°C sous agitation magnétique. On dégaze l'émulsion par bullage d'azote pendant une heure avant l'addition goutte à goutte de la solution oxydante dégazée au préalable (ammonium persulfate, 3,657 g dans 10,60 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse du UV) et estimé à 99%. La composition du composite est déterminé par ATG à PBuA/PANI-Cl=47/53. Le composite possède une conductivité de 0,20±0,03S.cm⁻¹.

### Exemple 2 : PBuA/PANI-Cl avec Igepal® CO 897 80/20

Dans un tricol muni d'une agitation mécanique, d'un réfrigérant et d'une ampoule d'addition, on dissout 3,325 g de tensioactif Igepal® CO 897 sec dans 200 mL d'eau avant d'ajouter en une fois 86,318 g d'acrylate de butyle (purifié par passage sur alumine basique) pour former l'émulsion. Le mélange réactionnel est porté à 70°C avant l'ajout de la solution oxydante (0,293 g d'ammonium persulfate (NH₄)₂S₂O₈ dans 4,09 mL d'eau). Le mélange réactionnel est laissé à 70°C, sous agitation (180 tr/min) pendant 24 heures. Le rendement de polymérisation est estimé à 87 % par gravimétrie. Le rayon des particules est mesuré par diffusion de lumière sur couche mince à 110 nm. Analyse thermique : début de dégradation à 290°C, dégradation totale à 600°C.

On prélève 29,98 g de latex qui sont placés dans un ballon de 250 mL contenant 105,7 g d'eau. 2,01 g de chlorhydrate d'anilinium sont additionnés au mélange et laissés sous agitation 30 min avant d'abaisser le mélange réactionnel à 0°C sous agitation magnétique. On dégaze l'émulsion par bullage d'azote pendant une heure avant l'addition goutte à goutte de la solution oxydante dégazée au préalable (ammonium persulfate, 3,557 g dans 5,84 g d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse du UV) et estimé à 98,7%. La composition du composite est déterminé par ATG à PBuA/PANI-Cl=80,3/19,7. Le composite possède une conductivité de 0,02±0,03S.cm⁻¹.

### Exemple 3 : PBuA/PANI-Cl avec Igepal® CO 897 95/05

Dans un tricol muni d'une agitation mécanique, d'un réfrigérant et d'une ampoule d'addition, on dissout 1,650 g de tensioactif Igepal® CO 897 dans 69,0 mL d'eau avant d'ajouter en une fois 33,5 mL d'acrylate de butyle pour former l'émulsion. Le mélange réactionnel est porté à 70°C avant l'ajout de la solution oxydante (0,102 g d'ammonium persulfate (NH₄)₂S₂O₈ dans 3,00 mL d'eau). Le mélange réactionnel est laissé à 70°C, sous agitation (200 tr/min) pendant 24 heures. Un prélèvement permet de mesurer le taux de solide à 29%, Le rayon des particules est mesuré par diffusion de la lumière à 100 nm. Analyse thermique : début de dégradation à 290°C, dégradation totale à 600°C.

Le mélange réactionnel est laissé sous agitation et ramené progressivement à température ambiante avant l'ajout de 1,50 g de chlorhydrate d'anilinium. Après 30 minutes sous agitation, le mélange réactionnel est refroidi à 0°C pour l'addition goutte à goutte de la solution oxydante (ammonium persulfate, 2,672 g dans 5,0 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse du UV) et estimé à 99%. La composition du composite est déterminé par ATG à PBuA/PANI-Cl=95/05. Le composite possède une conductivité de 0,01S.cm⁻¹.

### Exemple 4 : PBuA réticulé/PANI-Cl avec Igepal® CO 897 95/05

Dans un tricol muni d'une agitation mécanique, d'un réfrigérant et d'une ampoule d'addition, on dissout 1,675 g de tensioactif Igepal® CO 897 dans 69,6 mL d'eau avant d'ajouter en une fois 33,5 mL d'acrylate de butyle et 1,06 g de SR238 pour former l'émulsion. Le mélange réactionnel est porté à 70°C avant l'ajout de la solution oxydante (0,102 g d'ammonium persulfate (NH₄)₂S₂O₈ dans 2,00 mL d'eau). Le mélange, réactionnel est laissé à 70°C, sous agitation (180 tr/min) pendant 24 heures. Un prélèvement permet de mesurer le rendement de polymérisation à 97 % par gravimétrie. Le rayon des particules est mesuré par diffusion de la lumière à 100 nm.

Le mélange réactionnel est laissé sous agitation et ramené à température ambiante avant l'ajout de 1,512 g de chlorhydrate d'anilinium. Après 30 min sous agitation, le mélange réactionnel est refroidi à 0°C pour l'addition goutte à goutte de la solution oxydante (ammonium persulfate, 2,675 g dans 5,0 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse du UV) et estimé à 99%. La composition du composite est déterminé par ATG à PBuA/PANI-Cl=95,0/05,0. Le composite possède une conductivité de 2x10⁻⁴ S.cm⁻¹

### Exemple 5 : PBuA réticulé/PANI-Cl avec Igepal® CO 897 80/20

Dans un tricol muni d'une agitation mécanique, d'un réfrigérant et d'une ampoule d'addition, on dissout 4,771 g de tensioactif Igepal® CO 897 sec dans 200,5 mL d'eau avant d'ajouter en une fois 96 mL d'acrylate de butyle (purifié par passage sur alumine basique) et 3 mL de réticulant SR238 pour former l'émulsion. Le mélange réactionnel est porté à 70°C avant l'ajout de la solution oxydante (0,300 g d'ammonium persulfate (NH₄)₂S₂O₈ dans 2,93 g d'eau). Le mélange réactionnel est laissé à 70°C, sous agitation (180 tr/min) pendant 24 heures. Le rendement de polymérisation est estimé à 89,3 % par gravimétrie, présence d'agrégats, taux de solide à 27,97%. Le rayon des particules est mesuré par diffusion de lumière sur couche mince à 125 nm.

On prélève 28,57 g de latex qui sont placés dans un ballon de 250 mL contenant 107,12 g d'eau. 2,045 g de chlorhydrate d'anilinium sont additionnés au mélange et laissés sous agitation 30 minutes avant d'abaisser le mélange réactionnel à 0°C sous agitation magnétique. On dégaze l'émulsion par bullage d'azote pendant une heure avant l'addition goutte à goutte de la solution oxydante dégazée au préalable (ammonium persulfate, 3,555 g dans 8,96 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse du UV) et estimé à 99%. La composition du composite est déterminé par ATG à PBuA/PANI-Cl=80/20. Le composite possède une conductivité de 0,10±0,02S.cm⁻¹.

### Exemple 6 : PBuA/PANI-Cl avec Igepal® CO 897 et Ninol® 80/20

Dans un tricol muni d'une agitation mécanique, d'un réfrigérant et d'une ampoule d'addition, on dissout 3,320 g de tensioactif Igepal® CO 897 et 1,298 g de Ninol® dans 201 g d'eau avant d'ajouter en une fois 88,88 g d'acrylate de butyle pour former l'émulsion. Le mélange réactionnel est porté à 70°C avant l'ajout de la solution oxydante (0,372 g d'ammonium persulfate (NH₄)₂S₂O₈ dans 5 mL d'eau). Le mélange réactionnel est laissé à 70°C, sous agitation (180 tr/min) pendant 24 heures. Le rendement de polymérisation est estimé à 87 % par gravimétrie, la taille des particules (rayon) est mesurée par diffusion de lumière à 105 nm.

On prélève 30 g de latex qui sont placés dans un ballon de 250 mL contenant 100,7g d'eau. 2,03 g de chlorhydrate d'anilinium sont additionnés au mélange et laissés sous agitation 30min avant d'abaisser le mélange réactionnel à 0°C sous agitation. On dégaze l'émulsion par bullage d'azote pendant une heure avant l'addition goutte à goutte de la solution oxydante dégazée au préalable (ammonium persutfate, 3,65 g dans 8 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse du UV) et estimé à 98,5%. La composition du composite est déterminé par ATG à PBuA/PANI-Cl=80,3/19,6. Le composite possède une conductivité de 1,00S.cm⁻¹.

### Exemple 7 : PBuA/PANI-Cl avec Igepal® CO 897 et Ninol® 97,55/2,45 à latex haut taux de solide

Dans un tricol muni d'une agitation mécanique, d'un réfrigérant et d'une ampoule d'addition, on dissout 4,259 g de tensioactif Igepal® CO 897 et 1,563 g de Ninol® dans 155,00 g d'eau avant d'ajouter en une fois 114,66 g d'acrylate de butyle pour former l'émulsion. Le mélange réactionnel est porté à 60°C avant l'ajout de la solution oxydante (0,280 g d'ammonium persulfate (NH₄)₂S₂O₈ dans 5 mL d'eau). Le mélange réactionnel est laissé à 60°C, sous agitation (250 tr/min) pendant 24 heures. Le rendement de polymérisation est estimé à 99.9 % par gravimétrie, la taille des particules (rayon) est mesurée par diffusion de la lumière à 160 nm.

On prélève 40,16 g de latex qui sont placés dans un ballon de 100 mL contenant 10,05 g d'eau. 0,58 g de chlorhydrate d'anilinium sont additionnés au mélange et laissés sous agitation 30 min avant d'abaisser la température du mélange réactionnel à 0°C sous agitation. On dégaze l'émulsion par bullage d'azote pendant une heure avant addition goutte à goutte de la solution oxydante dégazée au préalable (ammonium persulfate, 1,028 g dans 1,514 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse par UV) et estimé à 97,5 %. Le composite possède une conductivité inférieure à 10⁻⁵ S.cm⁻¹.

### Exemple 8 : PBuA/PANI-Cl avec Igepal® CO 897 et Ninol® 97,55/2,45

Dans un tricol muni d'une agitation mécanique, d'un réfrigérant et d'une ampoule d'addition, on dissout 3,181 g de tensioactif Igepal® CO 897 et 1,160 g de Ninol® dans 201, 325 g d'eau avant d'ajouter en une fois 86,00 g d'acrylate de butyle pour former l'émulsion. Le mélange réactionnel est porté à 70°C avant l'ajout de la solution oxydante (0,300 g d'ammonium persulfate (NH₄)₂S₂O₈ dans 5 mL d'eau). Le mélange réactionnel est laissé à 70°C, sous agitation (250 tr/min) pendant 24 heures. Le rendement de polymérisation est estimé à 99.9 % par gravimétrie, la taille des particules (rayon) est mesurée par diffusion de la lumière à 150 nm.

On prélève 30.05 g de latex qui sont placés dans un ballon de 100 mL contenant 20,02 g d'eau. 0,316 g de chlorhydrate d'anilinium sont additionnés au mélange et laissés sous agitation 30 min avant d'abaisser la température du mélange réactionnel à 0°C sous agitation. On dégaze l'émulsion par bullage d'azote pendant une heure avant addition goutte à goutte de la solution oxydante dégazée au préalable (ammonium persulfate, 0,544 g dans 2,02 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse par UV) et estimé à 97,5 %. Le composite possède une conductivité inférieure à 10⁻⁵ S.cm⁻¹.

### Exemple 9 : PBuA/PANI-SO₄ avec Igepal® CO 897 et Ninol® 84,2/15,8.

Dans un tricol muni d'une agitation mécanique, d'un réfrigérant et d'une ampoule d'addition, on dissout 3,181 g de tensioactif Igepal® CO 897 et 1,160 g de Ninol® dans 201, 325 g d'eau avant d'ajouter en une fois 86,00 g d'acrylate de butyle pour former l'émulsion. Le mélange réactionnel est porté à 70°C avant l'ajout de la solution oxydante (0,300 g d'ammonium persulfate (NH₄)₂S₂O₈ dans 5 mL d'eau). Le mélange réactionnel est laissé à 70°C, sous agitation (250 tr/min) pendant 24 heures. Le rendement de polymérisation est estimé à 99,9 % par gravimétrie, la taille des particules (rayon) est mesurée par diffusion de la lumière à 150 nm.

On prélève 30,05 g de latex qui sont placés dans un ballon de 250 mL contenant 80,07 g d'eau. 2,430 g de disulfate d'anilinium sont additionnés au mélange et laissés sous agitation 30 min avant d'abaisser la température du mélange réactionnel à 0°C sous agitation. On dégaze l'émulsion par bullage d'azote pendant une heure avant addition goutte à goutte de la solution oxydante dégazée au préalable (ammonium persulfate, 3,864 g dans 5,02 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse par UV) et estimé à 99,7 %. Le composite possède une conductivité de 0,24 S.cm⁻¹.

### Exemple 10 : PBuA/PANI-CH₃SO₃ avec Igepal® CO 897 et Ninol® 84,2/15,8

Dans un tricol muni d'une agitation mécanique, d'un réfrigérant et d'une ampoule d'addition, on dissout 3,181 g de tensioactif Igepal® CO 897 et 1,160 g de Ninol® dans 201, 325 g d'eau avant d'ajouter en une fois 86,00 g d'acrylate de butyle pour former l'émulsion. Le mélange réactionnel est porté à 70°C avant l'ajout de la solution oxydante (0,300 g d'ammonium persulfate (NH₄)₂S₂O₈ dans 5 mL d'eau). Le mélange réactionnel est laissé à 70°C, sous agitation (250 tr/min) pendant 24 heures. Le rendement de polymérisation est estimé à 99,9 % par gravimétrie, la taille des particules (rayon) est mesurée par diffusion de la lumière à 150 nm.

On prélève 30,04 g de latex qui sont placés dans un ballon de 250 mL contenant 80,10 g d'eau. 3,163 g de sulfonate de méthyle d'anilinium sont additionnés au mélange et laissés sous agitation 30 min avant d'abaisser la température du mélange réactionnel à 0°C sous agitation. On dégaze l'émulsion par bullage d'azote pendant une heure avant addition goutte à goutte de la solution oxydante dégazée au préalable (ammonium persulfate, 3,858 g dans 5,02 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse par UV) et estimé à 99,7 %. Le composite possède une conductivité de 0,14 S.cm⁻¹.

### Exemple 11 : PBuA/PANI-CH₃CH₂SO₃ avec Igepal® CO 897 et Ninol® 84,2/15,8

Dans un tricol muni d'une agitation mécanique, d'un réfrigérant et d'une ampoule d'addition, on dissout 3,181 g de tensioactif Igepal® CO 897 et 1,160 g de Ninol® dans 201, 325 g d'eau avant d'ajouter en une fois 86,00 g d'acrylate de butyle pour former l'émulsion. Le mélange réactionnel est porté à 70°C avant l'ajout de la solution oxydante (0,300 g d'ammonium persulfate (NH₄)₂S₂O₈ dans 5 mL d'eau). Le mélange réactionnel est laissé à 70°C, sous agitation (250 tr/min) pendant 24 heures. Le rendement de polymérisation est estimé à 99,9 % par gravimétrie, la taille des particules (rayon) est mesurée par diffusion de la lumière à 150 nm.

On prélève 30,04 g de latex qui sont placés dans un ballon de 250 mL contenant 80,10 g d'eau. 3,400 g sulfonate d'éthyle d'anilinium sont additionnés au mélange et laissés sous agitation 30 min avant d'abaisser la température du mélange réactionnel à 0°C sous agitation. On dégaze l'émulsion par bullage d'azote pendant une heure avant addition goutte à goutte de la solution oxydante dégazée au préalable (ammonium persulfate, 3,879 g dans 5,021 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse par UV) et estimé à 99,6 %. Le composite possède une conductivité de 0,14 S.cm⁻¹.

### Exemple 12 : PBuA/PANI-CH₃CH₂PO₃ avec Igepal® CO 897 et Ninol® 84/16

Dans un tricol muni d'une agitation mécanique, d'un réfrigérant et d'une ampoule d'addition, on dissout 3,181 g de tensioactif Igepal® CO 897 et 1,160 g de Ninol® dans 201, 325 g d'eau avant d'ajouter en une fois 86,00 g d'acrylate de butyle pour former l'émulsion. Le mélange réactionnel est porté à 70°C avant l'ajout de la solution oxydante (0,300 g d'ammonium persulfate (NH₄)₂S₂O₈ dans 5 mL d'eau). Le mélange réactionnel est laissé à 70°C, sous agitation (250 tr/min) pendant 24 heures. Le rendement de polymérisation est estimé à 99.9 % par gravimétrie, la taille des particules (rayon) est mesurée par diffusion de la lumière à 150 nm.

On prélève 40,05 g de latex qui sont placés dans un ballon de 250 mL contenant 106,89 g d'eau. 5,0 g d'éthyle phosphonate d'anilinium sont additionnés au mélange et laissés sous agitation 30 min avant d'abaisser la température du mélange réactionnel à 0°C sous agitation. On dégaze l'émulsion par bullage d'azote pendant une heure avant addition goutte à goutte de la solution oxydante dégazée au préalable (ammonium persulfate, 5,175 g dans 6,648 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse par UV) et estimé à 99,7 %. Le composite possède une conductivité de 0,11 S.cm⁻¹.

### Exemple 13 : PBuA/PANI-HPO₄ avec Igepal® CO 897 et Ninol® 85/15

Dans un tricol muni d'une agitation mécanique, d'un réfrigérant et d'une ampoule d'addition, on dissout 3,181 g de tensioactif Igepal® CO 897 et 1,160 g de Ninol® dans 201, 325 g d'eau avant d'ajouter en une fois 86,00 g d'acrylate de butyle pour former l'émulsion. Le mélange réactionnel est porté à 70°C avant l'ajout de la solution oxydante (0,300 g d'ammonium persulfate (NH₄)₂S₂O₈ dans 5 mL d'eau). Le mélange réactionnel est laissé à 70°C, sous agitation (250 tr/min) pendant 24 heures. Le rendement de polymérisation est estimé à 99.9 % par gravimétrie, la taille des particules (rayon) est mesurée par diffusion de la lumière à 150 nm.

On prélève 30,08 g de latex qui sont placés dans un ballon de 250 mL contenant 80,1 g d'eau. 3,190 g de phosphate d'anilinium sont additionnés au mélange et laissés sous agitation 30 min avant d'abaisser la température du mélange réactionnel à 0°C sous agitation. On dégaze l'émulsion par bullage d'azote pendant une heure avant addition goutte à goutte de la solution oxydante dégazée au préalable (ammonium persulfate, 3,860 g dans 5,033 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse par UV) et estimé à 99,4 %. Le composite possède une conductivité de 0,15 S.cm⁻¹.

### Exemple 14 : PBuA-co-PAam/PANI-Cl avec Igepal® CO 897 et Ninol® 85/15

Dans un tricol muni d'une agitation mécanique, d'un réfrigérant et d'une ampoule d'addition, on dissout 3,181 g de tensioactif Igepal® CO 897, 1,160 g de Ninol® et 2,5 g d'acrylamide dans 199,86 g d'eau avant d'ajouter en une fois 83, 38 g d'acrylate de butyle pour former l'émulsion. Le mélange réactionnel est porté à 70°C avant l'ajout de la solution oxydante (0,300 g d'ammonium persulfate (NH₄)₂S₂O₈ dans 5 mL d'eau). Le mélange réactionnel est laissé à 70°C, sous agitation (250 tr/min) pendant 24 heures. Le rendement de polymérisation est estimé à 99.9 % par gravimétrie, la taille des particules (rayon) est mesurée par diffusion de la lumière à 160 nm.

On prélève 30,07 g de latex qui sont placés dans un ballon de 250 mL, contenant 80,4 g d'eau. 2,173 g de chlorhydrate d'anilinium sont additionnés au mélange et laissés sous agitation 30 min avant d'abaisser la température du mélange réactionnel à 0°C sous agitation. On dégaze l'émulsion par bullage d'azote pendant une heure avant addition goutte à goutte de la solution oxydante dégazée au préalable (ammonium persulfate, 3,878 g dans 5,030 mL d'eau). La polymérisation est laissée 5 heures à 0°C sous agitation magnétique puis le mélange réactionnel est laissé à température ambiante pendant 19 heures. Le rendement est mesuré par la concentration de l'anilinium résiduel (analyse par UV) et estimé à 99,4 %. Le composite possède une conductivité de 0,18 S.cm⁻¹.

## Revendications

1. Particules nanocomposites électriquement conductrices comprenant :
- un coeur constitué d'un homopolymère de polyacrylate d'alkyle en C₁-C₆ ou d'un copolymère d'acrylate d'alkyle en C₁-C₆ et d'un comonomère amide α, β-insaturée ;
- une écorce constituée de polyaniline ;
- un tensioactif non ionique.

2. Particules selon la revendication 1, dans laquelle le polyacrylate d'alkyle en C₁-C₆ est le polyacrylate de n-butyle.

3. Particules selon l'une des revendications 1 ou 2, dans lesquelles le polyacrylate d'alkyle est réticulé.

4. Particules selon l'une des revendications 1 à 3, dans lesquelles ledit comonomère amide α, β-insaturée est l'acrylamide.

5. Particules selon l'une quelconque des revendications 1 à 4, dans lesquelles le rapport en poids de polyacrylate d'alkyle / polyaniline varie de 45:55 à 98:2.

6. Particules selon la revendication 5, dans lesquelles le tensioactif non ionique est un composé de formule (I) : 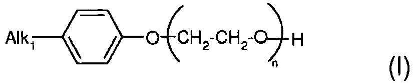 dans laquelle Alk₁ représente un groupe alkyle en C₁-C₁₅ et n un entier de 1 à 100.

7. Particules selon l'une quelconque des revendications précédentes, dans lesquelles le tensioactif représente 1 à 20 % en masse par rapport à la masse sèche totale de l'écorce et du coeur.

8. Particules selon l'une quelconque des revendications précédentes, comprenant en outre un deuxième tensioactif non ionique.

9. Particules selon la revendication 8, dans lesquelles le deuxième tensioactif non ionique comprend au moins une fonction amide.

10. Particules selon la revendication 9, dans lesquelles le deuxième tensioactif non ionique est un composé de formule (II) : 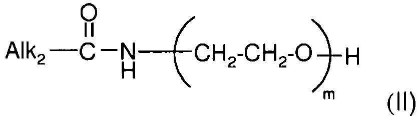 dans laquelle Alk₂ représente un groupe alkyle en C₁-C₂₀ et m représente un entier de 1 à 100.

11. Particules selon l'une quelconque des revendications 9 à 10 dans lesquelles le deuxième tensioactif non ionique représente 1 à 20 % en masse par rapport à la masse sèche totale de l'écorce et du coeur.

12. Dispersion de particules nanocomposites électriquement conductrices comprenant des particules telles que définies dans les revendications 1 à 11 dans un milieu dispersant.

13. Dispersion selon la revendication 12, dans laquelle le milieu dispersant est un milieu aqueux.

14. Dispersion selon l'une quelconque des revendications 12 ou 13 dans lesquelles le coeur possède une taille hydrodynamique, de 100 à 700 nm, et de préférence de 200 à 400 nm.

15. Procédé de préparation d'une dispersion de particules comprenant :
- un coeur constitué d'un polymère élastomère ou d'un copolymère d'un monomère élastomère et d'un comonomère amide α, β-insaturé,
- une écorce constituée de polyaniline, et
- d'un tensioactif non ionique,
ledit procédé comprenant :
a) la polymérisation de monomères élastomères, et le cas échéant de monomères amides α, β-insaturées, en présence d'un tensioactif non ionique et d'un catalyseur de polymérisation dans un milieu dispersant ; et
b) l'addition de monomères aniline et d'un catalyseur de polymérisation au milieu contenant les particules de polymère élastomère ou de copolymère de monomère élastomère et d'un comonomère amide α, β-insaturée obtenues à l'étape a),
dans lequel la température du milieu réactionnel de l'étape b) peut varier de -5 à 30°C et
dans lequel la polymérisation des monomères aniline est effectuée directement dans le milieu obtenu après polymérisation des monomères d'élastomère.

16. Procédé selon la revendication 15, dans lequel les monomères aniline sont des monomères chlorhydrate d'anilinium.

17. Procédé selon l'une des revendications 15 ou 16, dans lequel le polymère élastomère est choisi parmi les polyacrylates d'alkyle ou polyméthacrylates d'alkyle en C₁-C₆.

18. Procédé selon la revendication 17, dans lequel le polymère est un polyacrylate d'alkyle en C₁-C₆.

19. Procédé selon la revendication 18, dans lequel le polyacrylate d'alkyle en C₁-C₆ est le polyacrylate de n-butyle.

20. Procédé selon l'une quelconque des revendications 15 à 19, dans lequel le milieu dispersant est un milieu aqueux.

21. Procédé selon l'une quelconque des revendications 15 à 20, dans lequel le comonomère amide α, β-insaturée est l'acrylamide.

22. Procédé selon l'une quelconque des revendications 15 à 21, dans lequel le milieu dispersant à l'étape a) comprend en outre un deuxième tensioactif.

23. Procédé selon la revendication 15, dans lequel le catalyseur de polymérisation ajouté à l'étape b) est identique à celui mis en oeuvre à l'étape a).

24. Utilisation des particules selon l'une quelconque des revendications 1 à 11 ou d'une dispersion selon les revendications 12 à 14 pour la préparation ou l'application d'un matériau conducteur.

25. Procédé de préparation d'un film conducteur comprenant :
- un procédé de préparation d'une dispersion de particules selon les revendications 15 à 23 ;
- l'élimination du milieu dispersant.

26. Procédé selon la revendication 25, dans lequel la dispersion de particules est telle que définie aux revendications 12 à 14.

27. Film conducteur susceptible d'être obtenu selon le procédé de la revendication 26.

## Patentansprüche

1. Elektrisch leitfähige Verbundnanopartikel, umfassend:
- einen Kern, der von einem C₁-C₆-Alkylpolyacrylat-Homopolymer oder einem C₁-C₆-Alkylacrylat-Copolymer und einem α, β-ungesättigten Amid-Comonomer gebildet ist,
- eine Beschichtung, die aus Polyanilin besteht,
- ein nichtionisches Tensid.

2. Partikel nach Anspruch 1, wobei das C₁-C₆-Alkylpolyacrylat das n-Butyl-Polyacrylat ist.

3. Partikel nach einem der Ansprüche 1 oder 2, wobei das Alkylpolyacrylat vernetzt ist.

4. Partikel nach einem der Ansprüche 1 bis 3, wobei das α, β-ungesättigte Amid-Comonomer das Acrylamid ist.

5. Partikel nach einem der Ansprüche 1 bis 4, wobei das Gewichtsverhältnis Alkylpolyacrylat / Polyanilin von 45:55 bis 98:2 schwankt.

6. Partikel nach Anspruch 5, wobei das nichtionische Tensid eine Verbindung der Formel (I) ist: 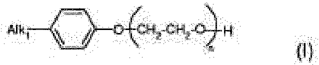 wobei Alk₁ eine C₁-C₁₅-Alkylgruppe und n eine Ganzzahl von 1 bis 100 darstellt.

7. Partikel nach einem der vorangehenden Ansprüche, wobei das Tensid 1 bis 20 Ma% in Bezug auf die Trockenmasse insgesamt der Beschichtung und des Kerns darstellt.

8. Partikel nach einem der vorangehenden Ansprüche, umfassend ferner ein zweites nichtionisches Tensid.

9. Partikel nach Anspruch 8, wobei das zweite nichtionische Tensid mindestens eine Amidfunktion umfasst.

10. Partikel nach Anspruch 9, wobei das zweite nichtionische Tensid eine Verbindung der Formel (II) ist: 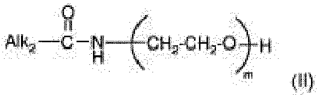 wobei Alk₂ eine C₁-C₂₀-Alkylgruppe darstellt und m eine Ganzzahl von 1 bis 100 darstellt.

11. Partikel nach einem der Ansprüche 9 bis 10, wobei das zweite nichtionische Tensid 1 bis 20 Ma% in Bezug auf die Trockenmasse insgesamt der Beschichtung und des Kerns darstellt.

12. Dispersion elektrisch leitfähiger Verbundnanopartikel, umfassend Partikel nach den Ansprüchen 1 bis 11 in einem Dispersionsmedium.

13. Dispersion nach Anspruch 12, wobei das Dispersionsmedium ein wässriges Medium ist.

14. Dispersion nach einem der Ansprüche 12 oder 13, wobei der Kern eine hydrodynamische Größe von 100 bis 700 nm und vorzugsweise von 200 bis 400 nm besitzt.

15. Verfahren zur Herstellung einer Partikeldispersion, umfassend:
- einen Kern, der von einem Elastomer-Polymer oder von einem Copolymer eines Monomer-Polymers und einem α, β-ungesättigten Amid-Comonomer gebildet ist,
- eine Beschichtung, die aus Polyanilin besteht, und
- ein nichtionisches Tensid,
wobei das Verfahren umfasst:
a) die Polymerisation von Elastomer-Monomeren und gegebenenfalls von α, β-ungesättigten Amid-Monomeren in Gegenwart eines nichtionischen Tensids und eines Polymerisationskatalysators in einem Dispersionsmedium, und
b) das Hinzufügen von Anilinmonomeren und eines Polymerisationskatalysators in das Medium, das die Elastomer-Polymer- oder Elastomer-Monomer-Copolymer-Partikel enthält und eines α, β-ungesättigten Amid-Comonomers aus Schritt a),
wobei die Temperatur des Reaktionsmediums von Schritt b) von -5 bis 30 °C schwanken kann,
wobei die Polymerisation der Anilin-Monomere direkt in dem Medium durchgeführt wird, das nach Polymerisation der Elastomer-Monomere erhalten ist.

16. Verfahren nach Anspruch 15, wobei die Anilin-Monomere Anilin-Chlorhydrat-Monomere sind.

17. Verfahren nach einem der Ansprüche 15 oder 16, wobei das Elastomer-Polymer aus den C₁-C₆-Alkyl-Polyacrylaten oder -Alkyl-Polymethacrylaten ausgewählt ist.

18. Verfahren nach Anspruch 17, wobei das Polymer ein C₁-C₆-Alkyl-Polyacrylat ist.

19. Verfahren nach Anspruch 18, wobei das C₁-C₆-Alkyl-Polyacrylaten das n-Butyl-Polyacrylat ist.

20. Verfahren nach einem der Ansprüche 15 bis 19, wobei das Dispersionsmedium ein wässriges Medium ist.

21. Verfahren nach einem der Ansprüche 15 bis 20, wobei das α, β-ungesättigte Amid-Comonomer das Acrylamid ist.

22. Verfahren nach einem der Ansprüche 15 bis 21, wobei das Dispersionsmedium in Schritt a) ferner ein zweites Tensid umfasst.

23. Verfahren nach Anspruch 15, wobei der in Schritt b) hinzugefügte Polymerisationskatalysator identisch mit dem ist, der in Schritt a) verwendet wurde.

24. Verwendung von Partikeln nach einem der Ansprüche 1 bis 11 oder einer Dispersion nach den Ansprüchen 12 bis 14 zur Herstellung oder Anwendung eines leitenden Materials.

25. Verfahren zur Herstellung einer leitfähigen Folie, umfassend:
- ein Verfahren zur Herstellung einer Partikeldispersion nach den Ansprüchen 15 bis 23,
- das Entfernen des Dispersionsmediums.

26. Verfahren nach Anspruch 25, wobei die Partikeldispersion den Ansprüchen 12 bis 14 entspricht.

27. Leitfähige Folie, die nach dem Verfahren nach Anspruch 26 herstellbar ist.

## Claims

1. Electrically conductive nanocomposite particles comprising:
- a core constituted by a poly-C₁-C₆-alkyl acrylate homopolymer or by a copolymer of C₁-C₆-alkyl acrylate and an α,β-unsaturated amide comonomer;
- a coating constituted by polyaniline;
- a non-ionic surfactant.

2. Particles according to claim 1, in which the poly-C₁-C₆-alkyl-acrylate is poly-n-butyl acrylate.

3. Particles according to either claim 1 or claim 2, in which the poly-alkylacrylate is crosslinked.

4. Particles according to any one of claims 1 to 3, in which said α,β-unsaturated amide comonomer is acrylamide.

5. Particles according to any one of claims 1 to 4, in which the ratio by weight of poly-alkyl-acrylate/polyaniline varies from 45:55 to 98:2.

6. Particles according to claim 5, in which the non-ionic surfactant is a compound of formula (I): 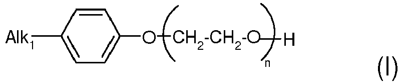 wherein Alk₁ represents a C₁-C₁₅-alkyl group and n represents an integer from 1 to 100.

7. Particles according to any one of the preceding claims, in which the surfactant represents from 1 to 20 % by weight, based on the total dry weight of the coating and the core.

8. Particles according to any one of the preceding claims, further comprising a second non-ionic surfactant.

9. Particles according to claim 8, in which the second non-ionic surfactant includes at least one amide function.

10. Particles according to claim 9, in which the second non-ionic surfactant is a compound of formula (II): 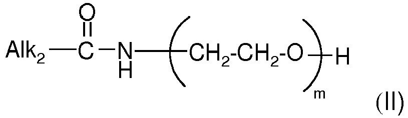 wherein Alk₂ represents a C₁-C₂₀-alkyl group and m represents an integer from 1 to 100.

11. Particles according to either claim 9 or claim 10, in which the second non-ionic surfactant represents from 1 to 20 % by weight, based on the total dry weight of the coating and the core.

12. Dispersion of electrically conductive nanocomposite particles comprising particles as defined in claims 1 to 11 in a dispersing medium.

13. Dispersion according to claim 12, in which the dispersing medium is an aqueous medium.

14. Dispersion according to either claim 12 or claim 13, in which the core has a hydrodynamic size of from 100 to 700 nm, preferably from 200 to 400 nm.

15. Process for the preparation of a dispersion of particles comprising:
- a core constituted by an elastomeric polymer or by a copolymer of an elastomeric monomer and an α,β-unsaturated amide comonomer,
- a coating constituted by polyaniline, and
- a non-ionic surfactant,
said process comprising:
a) the polymerization of elastomeric monomers, and where appropriate of α,β-unsaturated amide monomers, in the presence of a non-ionic surfactant and of a polymerization catalyst in a dispersing medium; and
b) the addition of aniline monomers and of a polymerization catalyst to the medium containing the particles of elastomeric polymer or of copolymer of elastomeric monomer and an α,β-unsaturated amide comonomer obtained in step a).
in which the temperature of the reaction mixture of step b) can vary from -5°C to 30°C and in which the polymerisation of aniline monomers is directly carried out in the medium obtained after polymerization of the elastomeric monomers.

16. Process according to claim 15, in which the aniline monomers are anilinium hydrochloride monomers.

17. Process according to either claim 15 or claim 16, in which the elastomeric polymer is selected from the poly-C₁-C₆-alkyl-acrylates or poly-C₁-C₆-alkyl methacrylates.

18. Process according to claim 17, in which the polymer is a poly-C₁-C₆-alkyl-acrylate.

19. Process according to claim 18, in which the poly-C₁-C₆-alkyl-acrylate is poly-n-butyl-acrylate.

20. Process according to any one of claims 15 to 19, in which the dispersing medium is an aqueous medium.

21. Process according to any one of claims 15 to 20, in which the α,β-unsaturated amide comonomer is acrylamide.

22. Process according to any one of claims 15 to 21, in which the dispersing medium in step a) further comprises a second surfactant.

23. Process according to claim 15, in which the polymerization catalyst added in step b) is identical to that employed in step a).

24. Use of the particles according to any one of claims 1 to 11 or of a dispersion according to claims 12 to 14 in the preparation or application of a conductive material.

25. Process for the preparation of a conductive film, comprising:
- a process for the preparation of a dispersion of particles according to claims 15 to 23;
- removal of the dispersing medium.

26. Process according to claim 25, in which the dispersion of particles is as defined in claims 12 to 14.

27. Conductive film obtainable according to the process of claim 26.
